# EUROPEAN PATENT APPLICATION

(11) **EP 3 442 238 A1**
(43) Date of publication of application: **13.02.2019**
(21) Application number: 16897713.0
(22) Date of filing: 09.09.2016
(51) Int. Cl.: H04N 21/431, H04N 21/443, H04N 21/472, H04N 21/858, H04N 21/81

(54) **VIDEO FRAME CAPTURING METHOD AND DEVICE**

(30) Priority: 07.04.2016 CN 201610213548
(71) Applicant: Youku Internet Technology (Beijing) Co., Ltd., Beijing 100102 (CN)
(72) Inventor: WANG, Zhenzhong, Beijing 100029 (CN); ZHOU, Qingxia, Beijing 100029 (CN); HUA, Wenwei, Beijing 100029 (CN); JING, Fengshan, Beijing 100029 (CN); WEI, Ming, Beijing 100029 (CN); PAN, Baiyu, Beijing 100029 (CN); WANG, Ji, Beijing 100029 (CN)
(74) Representative: Weickmann & Weickmann PartmbB
(86) International application number: PCT/CN2016/098629
(87) International publication number: WO 2017/173781

(57) **Abstract**

Provided is a video frame capturing method and device. The method comprises: displaying in a video playback interface, in response to a user operating a first control in the video playback interface, pictures each of which corresponds to one of a predetermined number of video frames in proximity to a current video frame being played; receiving from the user a selection of at least a part of the pictures; displaying a composite picture formed using selected pictures. Embodiments of the present disclosure provide in the video playback interface corresponding pictures of several video frames in proximity to the current video frame for selection of the user, and form a composite picture using the pictures selected by the user, so that the user can capture several video frames in the video to form a composite picture for saving or sharing.

## Description

### CROSS-REFERENCE TO RELATED APPLICATION

The present application is based upon and claims the benefit of a priority of Chinese Patent Application No. 201610213548.3, filed on April 7, 2016, the entire contents of which are incorporated herein by reference.

### TECHNICAL FIELD

The present disclosure relates to the technical field of video, in particular, a video frame capturing method and device.

### BACKGROUND

Watching videos on terminals such as smartphones and computers has gradually become a part of life for the users. When a user is watching videos, he or she often wants to save an encountered video highlight (e.g., a wonderful dialogue) to the local or share the same on a social platform. The best to express a video highlight is typically several video frames of the highlight. However, there is no convenient means in the prior art that enables the user to capture the desired video frames from the video for easy saving or sharing.

### SUMMARY

### Technical problem

In view of the above, the present disclosure describes a video frame capturing method and device for enabling a user to capture a plurality of video frames from a video to form a picture for saving or sharing.

### Solution

In one aspect of the present disclosure, there is described a video frame capturing method, comprising: displaying in a video playback interface, in response to a user operating a first control in the video playback interface, pictures each of which corresponds to one of a predetermined number of video frames in proximity to a current video frame being played; receiving from the user a selection of at least a part of the pictures; and displaying a composite picture formed using selected pictures.

In another aspect of the present disclosure, there is described a video frame capturing device, comprising: a picture displayer to display in a video playback interface, in response to a user operating a first control in the video playback interface, pictures each of which corresponds to one of a predetermined number of video frames in proximity to a current video frame being played; a selection receiver to receive from the user a selection of at least a part of the pictures; and a composite picture displayer to display a composite picture formed using selected pictures.

### Advantageous Effects

Embodiments of the present disclosure provide in the video playback interface pictures corresponding to a plurality of video frames in proximity to the current video frame for the user to select, and form a composite picture using the selected pictures, so that the user can capture a plurality of video frames of the video to form a composite picture for saving or sharing.

### BRIEF DESCRIPTION OF THE DRAWINGS

The drawings incorporated in and forming a part of the present description illustrate exemplary embodiments, features, and aspects of the present disclosure, and are used for explaining the principles of the present disclosure.
Fig. 1 is a flow chart of a video frame capturing method according to one embodiment of the present disclosure.
Fig. 2 is a schematic diagram of a video playback interface of a terminal in a normal playback state.
Fig. 3 is a schematic diagram of one example of the second popover view provided in response to a user clicking the second control in the playback window.
Fig. 4 is a schematic diagram of displaying pictures of a predetermined number of video frames in response to a user clicking the first control.
Fig. 5 is a schematic diagram of selection of pictures.
Fig. 6 is a schematic diagram of a generated composite picture.
Fig. 7 is a structural block diagram of a video frame capturing device according to one embodiment of the present disclosure.
Fig. 8 is a structural block diagram of a video frame capturing device according to another embodiment of the present disclosure.

### DETAILED DESCRIPTION

Various exemplary examples, features and aspects of the present disclosure will be described in detail with reference to the drawings. The same reference numerals in the drawings represent parts having the same or similar functions. Although various aspects of the examples are shown in the drawings, it is unnecessary to proportionally draw the drawings unless otherwise specified.

Herein the term "exemplary" means "used as an instance or example, or explanatory". An "exemplary" example given here is not necessarily construed as being superior to or better than other examples.

Numerous details are given in the following examples for the purpose of better explaining the present disclosure. It should be understood by a person skilled in the art that the present disclosure can still be realized even without some of those details. In some of the examples, methods, means, units and circuits that are well known to a person skilled in the art are not described in detail so that the principle of the present disclosure become apparent.

### EMBODIMENT 1

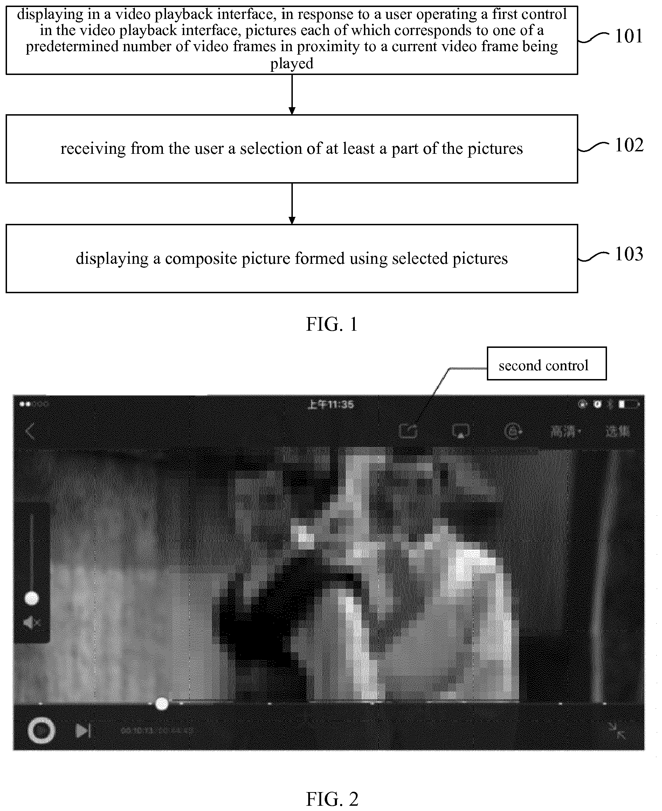

Fig. 1 is a flow chart of a video frame capturing method according to one embodiment of the present disclosure. The method can be used in a process where a user watches a video program on a terminal. As shown in Fig. 1, the video frame capturing method mainly includes the following steps:
a step 101 of displaying in the video playback interface, in response to a user operating a first control in the video playback interface, pictures each of which corresponds to one of a predetermined number of video frames in proximity to a current video frame being played;
a step 102 of receiving from the user a selection of at least a part of the pictures; and
a step 103 of displaying a composite picture formed using selected pictures.

The embodiment of the present disclosure provides in the video playback interface pictures corresponding to a plurality of video frames in proximity to the current video frame for the user to select, and forms a composite picture using the selected pictures, so that the user can capture a plurality of video frames of the video to form a composite picture for saving or sharing.

The term "video playback interface" can indicate a video playback window in a webpage, a playback interface of video player application software, or any other interface applicable for video playback.

Each of the predetermined number of video frames in proximity to a current video frame being played can include one or both of: video frames subsequent to the current video frame being played; and video frames preceding the current video frame being played. For example, if the predetermined number is N, it can be N video frames subsequent to the current video frame being played (the current video frame can be included), or N video frames preceding the current video frame being played (the current video frame can be included), or N1 video frames subsequent to the current video frame being played and N2 video frames preceding the current video frame being played, as long as the relationship N1+N2=N-1 is satisfied, i.e., plus the current video frame, there are N video frames in total.

The video frames can be consecutive or non-consecutive. The principles for selecting the video frames can be set as desired, which is not limited in the present disclosure.

To facilitate the description, this description is made with video frames subsequent to the current video frame being played as an example.

One exemplary implementation of the embodiment of the present disclosure is described below with reference to Figs. 2 to 6. One skilled in the art should understand that, the implementation described below merely intends to explain and facilitate understanding of the present disclosure, instead of limiting the present disclosure for any purpose.

Fig. 2 is a schematic diagram of a video playback interface on a terminal in a normal playback state. The playback interface includes a playback window, below which is a video playback control column for controlling playback speed, play/pause, volume, etc. of the video. Some controls can be provided above the playback window. In one example, these controls can include the first control for example, a button "Share Frame by Frame", or an operable control in other form, by clicking which, the user causes the playback interface to display pictures corresponding to a predetermined number of video frames following the current video frame being played, each video frame corresponding to one picture. The video can be paused by operating the first control.

It should be noted that, the term "control" herein can be an operable control in any form, for example, a button, a slide, etc. The operation of the control can include, for example, but not limited to, click, hovering the cursor, slide, etc. For the purpose of simple description, the examples below mainly use "button" and "click" as examples of the control and the operation of the control. The present disclosure is not limited by this.

In another example, the first control can be provided yet not directly in a control of the playback window. For example, a second control such as a "Share" button can be provided in the playback window (as shown in Fig. 2). In response to a user operating the second control (e.g., clicking the Share button), the video is paused; and a popover view (the second popover view) which can include the first control (e.g., a button "Share Frame by Frame") is displayed in the video playback interface (e.g., at a position overlapping the video playback window).

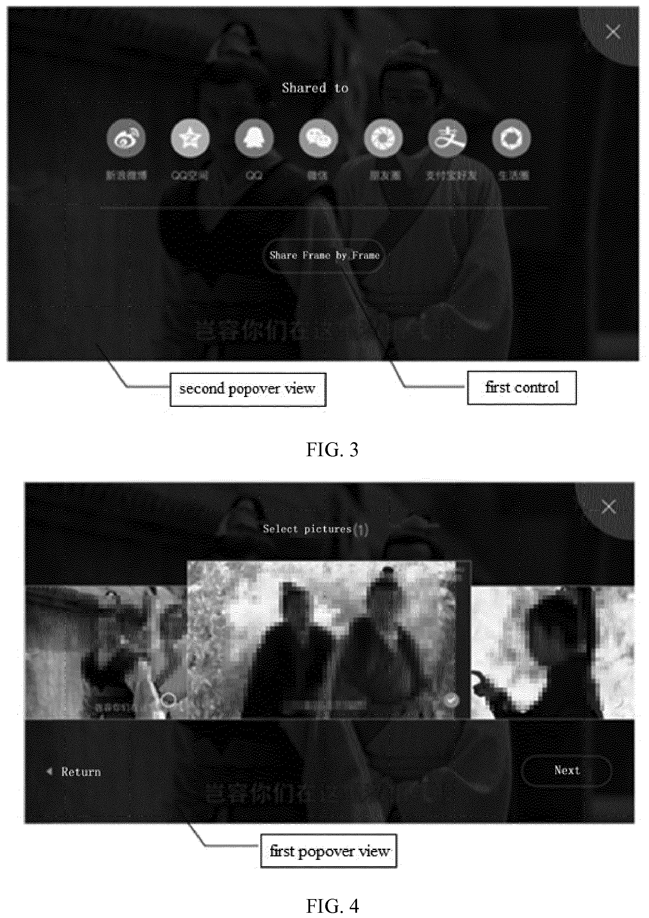

Fig. 3 is a schematic diagram of one example of the second popover view provided in response to a user clicking the second control in the playback window. In one example, when it is detected that the user clicks a "Share" button (the second control) above the playback window, the terminal can pause the video playback and pop up the second popover view, as shown in Fig. 3. The second popover view can include a button "Share Frame by Frame" (first control). The second popover view can further include other controls, such as a control for sharing the link of the entire video on various network platforms, or for realizing other functions. As an exemplary implementation, a Hypertext Markup Language (HTML) structure can be written according to the page design shown in Fig. 3 and hidden by default, with a click event being bound to the "Share" button (the second control). When the user clicks the Share button to trigger the event, the Cascading Style Sheet (CSS) attribute of the webpage shown in Fig. 3 can be changed according to the designed HTML structure, so that the second popover view can be displayed to provide a button "Share Frame by Frame" (the first control) for the user to operate. Those skilled in the art should understand that the specific implementation is merely illustrative, and that those skilled in the art may choose other suitable manners to provide first control.

Fig. 4 is a schematic diagram of displaying pictures of a predetermined number of video frames in response to a user clicking the first control. In one example, in response to the user clicking the first control, a first popover view can be displayed in the video playback interface (e.g., at a position overlapping the video playback window) (meanwhile the second popover view shown in Fig. 3 can be ceased to display). In the first popover view, there can be displayed pictures corresponding to each of the predetermined number of video frames following the current video frame being played, each picture corresponding to one video frame. The predetermined number can be set as needed, and is not limited herein. As an exemplary implementation, for example, an operation of pushing the first popover view can be triggered in response to an operation of the first control. For instance, a server completes video reading of the played video through a video reading class Video Reader of Matlab and acquires the predetermined number of video frames of the played video object by calling the format "video = read(obj, index)"; a server interface provides the read out data of the predetermined number of video frames for a client; the client can convert each video frame into a corresponding picture and display the picture in the first popover view. Those skilled in the art should understand that the specific implementation is illustrative, and that those skilled in the art can select other suitable manners to provide the pictures corresponding to each video frame.

A selection of the user of at least a part of the pictures among the pictures displayed can be received. A composite picture formed by the selected pictures can be displayed. In one example, a limit can be imposed on the number of the selectable pictures for the user, so as to facilitate the dimension control of the subsequently formed composite picture (or can be called a long picture). For example, it can be limited to 6 pictures.

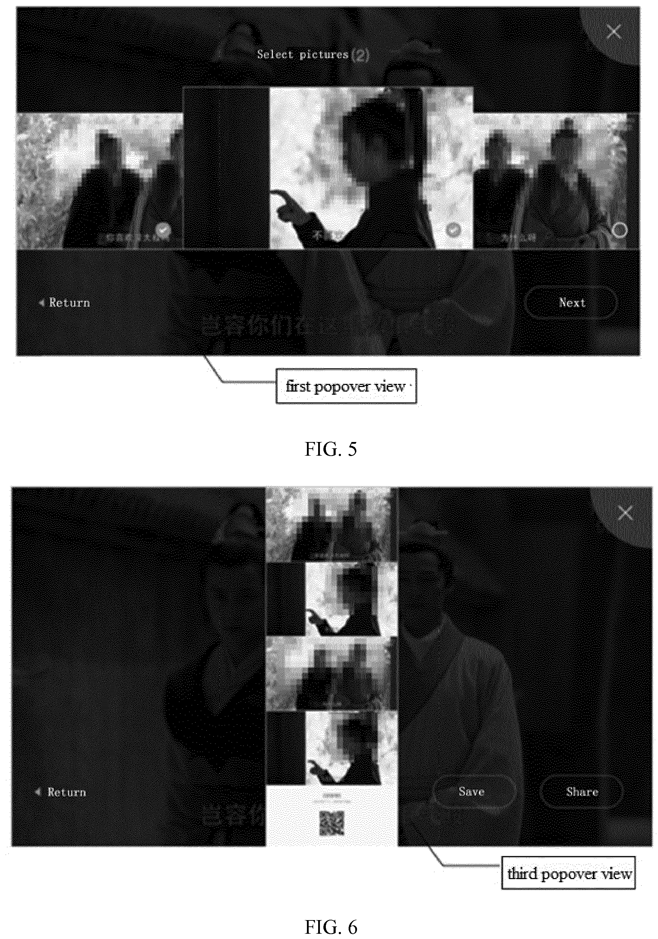

Fig. 5 is a schematic diagram of selection of pictures. In the example shown in Fig. 5, the user can slide laterally to click and select the desired pictures. A checkbox (e.g., a white circle) can be provided at a certain position of the picture (e.g., at the right bottom shown in Fig. 5). The user can click the checkbox to select the corresponding picture. As shown in Fig. 5, the user can slide left and right to select multiple pictures. The first popover view is further provided with other controls such as a "Next" button and a "Return" button. After selecting the pictures, the user may click the "Next" button. In response to detecting that the user clicks the "Next" button, the selected pictures are combined into a composite picture, and the composite picture is displayed. In response to the user clicking the "Return" control, for example, the state as shown in Fig. 3 can be returned.

For example, when each of the video frames are converted to the corresponding pictures as described in the foregoing, Checkboxes option of HTML can be added to each picture, so that the user can select multiple pictures. The client can use a javascript to acquire the type value of the selected pictures and send a request to the server by ajax technology. The server, in response to the request, returns a Uniform Resource Locator (URL) address of the composite picture. The client can exhibit a new popover view including the composite picture in a view layer based on the above address. One example of the specific processing method for the server generating the composite picture is described below. The server can generate a composite picture according to picture ID information transmitted back by the client. With the php language as an example, an extension library of graphs i.e., GD library can be processed by using php. GD library provides a series of application program interfaces (API) for processing pictures. The composite picture can be generated using the GD library. Specifically, a large canvas can be calculated according to the width and height of the selected pictures so as to combine multiple pictures. The URL address of the composite picture is returned to the client.

Fig. 6 is a schematic diagram of a generated composite picture. In one embodiment, in addition to the selected pictures, the composite picture can further comprise the link information orienting to an address of the video playback interface. The link information can be a two-dimensional code (QR code) associated with the address of the video playback interface. A user viewing the generated composite picture can touch and hold or scan the two-dimensional code to directly open the corresponding original video. The picture of the two-dimensional code can be generated by the server terminal and is used for saving formatted data. In one exemplary implementation, the processing of combining the two-dimensional code and the composite picture and the processing of selecting pictures to generate the composite picture can be performed synchronously in an identical manner. With using php language as an example, the afore-mentioned GD library can be used to combine the two-dimensional code picture with the composite picture and return a URL address of the composite picture of the client.

In the example shown in Fig. 6, the picture formed can be displayed in the third popover view (meanwhile the first popover view shown in Figs. 4 and 5 can be ceased to display). The third popover view can further comprise a control (e.g., a Share button) for sharing the picture. In response to a user operating the control for sharing the picture, the picture can be shared to other users or on a network platform such as Moments. One exemplary implementation is described below. Generally, a client has a code component for realizing the function of sharing. Taking a client under an Android environment as an example, Android API provides a ShareActionProvider method such that the sharing function can be realized merely by setting a Share intent. The event of the Share button can be monitored. When the event is detected, the packaged Share component is called to share information including the URL address, the content and the title of the playback page.

In one example, the third popover view further includes a control for saving the composite picture. In response to the user operating the control for saving the composite picture (e.g., a Save button), the composite picture can be saved in the terminal. One exemplary implementation is described below. Document object provides an execCommand method. The contents in an editable region can be operated by transmitting parameters to this method. For example, document.execCommand ("saveAs") can save the picture to documentation in a local storage device of the client. A click event can be bound to the Save button. When the event is triggered, a packaged javascript can be called to realize the function of saving the picture.

When the operation of sharing or saving the picture is completed, normal playback of the video is restored.

In one example, there can be further displayed in the third popover view a "Return" button. In response to a user clicking the Return button, the state as shown in Fig. 4 or 5 can be restored such that the user can reselect the pictures corresponding to the video frames of the video.

### EMBODIMENT 2

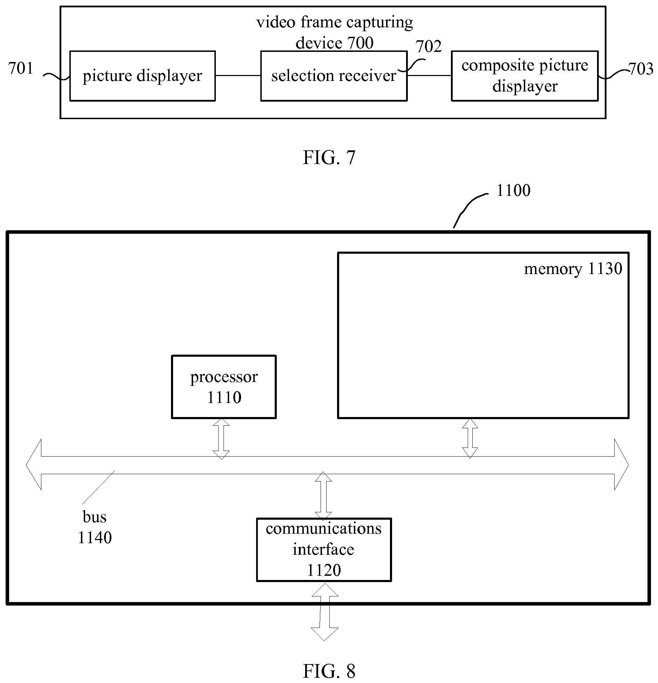

Fig. 7 is a structural block diagram of a video frame capturing device according to one embodiment of the present disclosure. As shown in Fig. 7, the device 700 mainly comprises: a picture displayer 701 to display in the video playback interface, in response to a user operating a first control in a video playback interface, pictures each of which corresponds to one of a predetermined number of video frames in proximity to a current video frame being played; a selection receiver 702 to receive from the user a selection of at least a part of the pictures; a composite picture displayer 703 to display a composite picture formed using selected pictures.

The predetermined number of video frames in proximity to a current video frame being played include one or both of: video frames subsequent to the current video frame being played and video frames preceding the current video frame being played.

In one example, the picture displayer 701 can display, in response to the user operating the first control in the video playback interface, a first popover view in the video playback interface, the first popover view containing the picture.

In one example, the device can further comprises a second popover view displayer to display, in response to the user operating a second control in the video playback interface, a second popover view in the video playback interface, the second popover view containing the first control.

In one example, the composite picture can further contain link information orienting to an address of the video playback interface.

In one example, the link information can be a two-dimensional code associated with the address of the video playback interface.

In one example, the composite picture displayer can, in response to receiving from the user the selection of at least a part of the pictures, cease to display the first popover view, and display a third popover view containing the composite picture.

In one example, the third popover view can include a third control for sharing the composite picture. The device can further comprise a sharer to, in response to a user operating the third control, share the composite picture on a network platform.

In one example, the third popover view can include a fourth control for saving the composite picture. The device can further comprise a saver to, in response to a user operating the fourth control, save the composite picture.

### EMBODIMENT 3

Fig. 8 is a structural block diagram of a video frame capturing device according to another embodiment of the present disclosure. The video frame capturing device 1100 can be a host server having a computing capability, a personal computer PC, or a portable computer or terminal, etc. The specific embodiments of the present disclosure do not limit the specific implementation of the computing node.

The video frame capturing device 1100 includes a processor 1110, a communications interface 1120, a memory 1130, and a bus 1140, wherein the processor 1110, the communications interface 1120, and the memory 1130 perform communications with each another via the bus 1140.

The communications interface 1120 is used for communications with network devices including for example, a virtual machine management center, a shared memory, and the like.

The processor 1110 is used for executing a program. The processor 1110 can be a central processing unit (CPU), or an application specific integrated circuit (ASIC), or one or more integrated circuits configured to implement the embodiments of the present disclosure.

The memory 1130 is used for storing files. The memory 1130 can include a high speed RAM memory, and can further include a non-volatile memory such as at least one disk memory. The memory 1130 can also be a memory array. The memory 1130 can be partitioned, wherein the partitioned segments can be combined to form a virtual volume according to certain rules.

In one possible implementation, the foregoing program can be program codes including instructions to be executed by a computer. The program can be specifically applied for executing operations of each step of Embodiment 1.

Those of ordinary skill in the art will appreciate that the various exemplary units and algorithm steps in the embodiments described herein can be implemented in electronic hardware or a combination of computer software and electronic hardware. Whether these functions are implemented in form of hardware or software depends on the specific application and design constraints of the solution. A person skilled in the art can select different methods for implementing the described functions for a particular application. But such implementation should not be considered to be beyond the scope of the present disclosure.

If the function is implemented in form of computer software and sold or used as a stand-alone product, it is considered to some extent that all or part of the technical solution of the present disclosure (for example, a part contributing to the prior art) is embodied in form of a computer software product. The computer software product is typically stored in a computer readable non-volatile storage medium, including instructions for causing a computer device (which may be a PC, a server, or a network device, etc.) to execute all or a part of the steps of the methods according to each embodiment of the present disclosure. The storage medium includes various media that can store program codes, such as a USB flash drive, a removable hard disk, a read-only memory (ROM), a random access memory (RAM), a magnetic disk, or an optical disk.

Although the embodiments of the present disclosure have been described above, the protection scope of the present disclosure is not limited herein. Any variations and modifications that may occur to one skilled in the art without departing from the scopes of the described embodiments should be included in the protection scope of the present disclosure. Therefore, the scope of the disclosure should only be limited by the appended claims.

### Practicability

The video frame capturing method and device according to the embodiments of the present disclosure enable a user to capture multiple video frames of a video to form a composite picture for saving or sharing.

## Claims

1. A video frame capturing method, comprising:
displaying in a video playback interface, in response to a user operating a first control in the video playback interface, pictures each of which corresponds to one of a predetermined number of video frames in proximity to a current video frame being played;
receiving from the user a selection of at least a part of the pictures; and
displaying a composite picture formed using selected pictures.

2. The video frame capturing method according to claim 1, wherein the predetermined number of video frames in proximity to the current video frame being played include one or both of:
video frames subsequent to the current video frame being played; and
video frames preceding the current video frame being played.

3. The video frame capturing method according to claim 1, wherein displaying in the video playback interface, in response to the user operating the first control in the video playback interface, pictures each of which corresponds to one of the predetermined number of video frames in proximity to the current video frame being played comprises:
displaying, in response to the user operating the first control in the video playback interface, a first popover view in the video playback interface, the first popover view containing the pictures.

4. The video frame capturing method according to claim 1, further comprising:
displaying, in response to the user operating a second control in the video playback interface, a second popover view in the video playback interface, the second popover view containing the first control.

5. The video frame capturing method according to claim 1, wherein the composite picture further contains link information orienting to an address of the video playback interface.

6. The video frame capturing method according to claim 5, wherein the link information is a two-dimensional code associated with the address of the video playback interface.

7. The video frame capturing method according to claim 3, wherein displaying the composite picture formed using selected pictures comprises:
in response to receiving from the user the selection of at least a part of the pictures, ceasing to display the first popover view, and displaying a third popover view containing the composite picture.

8. The video frame capturing method according to claim 7, wherein the third popover view contains a third control for sharing the composite picture,
the method further comprises: in response to the user operating the third control, sharing the composite picture on a network platform.

9. The video frame capturing method according to claim 7, wherein the third popover view contains a fourth control for saving the composite picture,
the method further comprises: in response to the user operating the fourth control, saving the composite picture.

10. A video frame capturing device, comprising:
a picture displayer to display in a video playback interface, in response to a user operating a first control in the video playback interface, pictures each of which corresponds to one of a predetermined number of video frames in proximity to a current video frame being played;
a selection receiver to receive from the user a selection of at least a part of the pictures; and
a composite picture displayer to display a composite picture formed using selected pictures.

11. The video frame capturing device according to claim 10, wherein the predetermined number of video frames in proximity to the current video frame being played include one or both of:
video frames subsequent to the current video frame being played; and
video frames preceding the current video frame being played.

12. The video frame capturing device according to claim 10, wherein displaying in the video playback interface, in response to the user operating the first control in the video playback interface, pictures each of which corresponds to one of the predetermined number of video frames in proximity to the current video frame being played comprises:
displaying, in response to the user operating the first control in the video playback interface, a first popover view in the video playback interface, the first popover view containing the pictures.

13. The video frame capturing device according to claim 10, further comprising:
a second popover view displayer to display, in response to the user operating a second control in the video playback interface, a second popover view in the video playback interface, the second popover view containing the first control.

14. The video frame capturing device according to claim 10, wherein the composite picture further contains link information orienting to an address of the video playback interface.

15. The video frame capturing device according to claim 14, wherein the link information is a two-dimensional code associated with the address of the video playback interface.

16. The video frame capturing device according to claim 12, wherein displaying the composite picture formed using selected pictures comprises:
in response to receiving from the user the selection of at least a part of the pictures, ceasing to display the first popover view, and displaying a third popover view containing the composite picture.

17. The video frame capturing device according to claim 16, wherein the third popover view contains a third control for sharing the composite picture,
the device further comprises: a sharer to share, in response to the user operating the third control, the composite picture on a network platform.

18. The video frame capturing device according to claim 16, wherein the third popover view contains a fourth control for saving the composite picture,
the device further comprises: a saver to save, in response to the user operating the fourth control, the composite picture.
